# EUROPÄISCHE PATENTANMELDUNG

(11) **EP 3 650 109 A2**
(43) Veröffentlichungstag der Anmeldung: **13.05.2020**
(21) Anmeldenummer: 19203458.5
(22) Anmeldetag: 16.10.2019
(51) Int. Cl.: B01D 53/94, F01N 3/10, F02B 43/00

(54) **VERFAHREN ZUR NACHBEHANDLUNG DES ABGASES EINER BRENNKRAFTMASCHINE UND BRENNKRAFTMASCHINE**

(30) Priorität: 12.11.2018 DE 102018128152
(71) Anmelder: MAN Energy Solutions SE, 86153 Augsburg (DE)
(72) Erfinder: DÖRING, Andreas, 82008 München/Unterhaching (DE)

(57) **Zusammenfassung**

Verfahren zur Nachbehandlung des Abgases einer einen gasförmigen Kraftstoff verbrennenden Brennkraftmaschine (1), nämlich eines Gasmotors oder eines im Gaskraftstoffbetriebsmodus betriebenen Dual-Fuel-Motors, wobei das Abgas über einen CH₄-Oxidationskatalysator (7) geführt wird, der zur CH₄-Oxidation und demnach als katalytisch aktive Verbindung ein Pyrochlor und/oder ein Beta polymorph A-Typ (BEA) Zeolithe und/oder ein Colbalt-Nickel-Oxid aufweist, und wobei das über den CH₄-Oxidationskatalysator zu führende Abgas einen NO₂-Anteil, bezogen auf einen Gesamtanteil an Stickoxiden, von mindestens 15% aufweist. (Fig. 1)

## Beschreibung

Die Erfindung betrifft ein Verfahren zur Nachbehandlung des Abgases einer einen gasförmigen Kraftstoff verbrennenden Brennkraftmaschine, nämlich eines Gasmotors oder eines im Gaskraftstoffbetriebsmodus betriebenen Dual-Fuel-Motors. Weiterhin betrifft die Erfindung eine Brennkraftmaschine, nämlich einen Gasmotor oder Dual-Fuel-Motor.

In Gasmotoren sowie in Dual-Fuel-Motoren im Gaskraftstoffbetriebsmodus wird ein gasförmiger Kraftstoff, wie zum Beispiel Erdgas, verbrannt. Bei derartigen Brennkraftmaschinen, die einen gasförmigen Kraftstoff verbrennen, kann es aufgrund einer unvollständigen Verbrennung des gasförmigen Kraftstoffs zu unerwünschten Emissionen von CH₄ (Methan) kommen. Da Methan ein starkes Treibhausgas darstellt, sind bei Brennkraftmaschinen, die einen gasförmigen Kraftstoff verbrennen, die CH₄-Emissionen in die Umgebung so gering wie möglich zu halten.

Aus der Praxis ist es bereits bekannt, dass Abgas, welches die Zylinder einer einen gasförmigen Kraftstoff verbrennenden Brennkraftmaschine verlässt, über einen CH₄-Oxidationskatalysator zu führen, um im CH₄-Oxidationskatalysator das CH₄ zu ersetzen. Dabei kommen bei aus der Praxis bekannten Brennkraftmaschinen im CH₄-Oxidationskatalysator zur CH₄-Oxidation und demnach als katalytisch aktive Verbindungen mit Metallen der Platinmetallgruppe, insbesondere mit Platin und/oder mit Palladium, zum Einsatz. Dabei beträgt bei aus der Praxis bekannten Brennkraftmaschinen die Beladung des CH₄-Oxidationskatalysators mit einem Metall der Platinmetallgruppe typischerweise mehr als 7 Gramm Platin und/oder Palladium pro Liter Volumen des CH₄-Oxidationskatalysators.

Hierdurch werden hohe Kosten verursacht. Ferner ist die Betriebszeit solcher aus der Praxis bekannter CH₄-Oxidationskatalysatoren relativ gering, da Schwefeloxide, die in den Bereich des CH₄-Oxidationskatalysators gelangen können, die katalytisch aktiven Verbindungen der Platinmetallgruppe deaktivieren können. Daher ist bei aus der Praxis bekannten Brennkraftmaschinen die Möglichkeit zur Reduktion der CH₄-Immissionen beschränkt.

Aus der DE 10 2015 001 495 A1 ist ein Verfahren zum Betreiben einer Brennkraftmaschine bekannt, in welcher ein gasförmiger Kraftstoff verbrannt wird. Abgas wird über einen CH₄-Oxidationskatalysator geführt, wobei der NO₂-Anteil im Abgas so eingestellt wird, dass stromaufwärts des CH₄-Oxidationskatalysators der NO₂-Anteil an den Gesamtstickoxiden im Abgas mindestens 15 % beträgt.

Der CH₄-Oxidationskatalysator der DE 10 2015 001 495 A1 weist zur CH₄-Oxidation als Aktivkomponenten vorzugsweise Cer und/oder Cobalt und/oder Kupfer und/oder Eisen auf, die vorzugsweise in eine Zeolithmatrix der Strukturen MOR, FER, PER, NFI, LTL, LAU, CHI oder CHA eingebunden sind.

Es besteht Bedarf daran, die Zersetzung von CH₄ im Abgas weiter zu verbessern, um CH₄-Emissionen an mit einem gasförmigen Kraftstoff betriebenen Brennkraftmaschinen weiter zu reduzieren.

Hiervon ausgehend liegt der Erfindung die Aufgabe zugrunde, ein neuartiges Verfahren zur Nachbehandlung des Abgases einer einen gasförmigen Kraftstoff verbrennenden Brennkraftmaschine und eine entsprechende Brennkraftmaschine zu schaffen.

Diese Aufgabe wird durch ein Verfahren nach Anspruch 1 gelöst.

Das Abgas wird erfindungsgemäß über einen CH₄-Oxidationskatalysator geführt wird, der zur CH₄-Oxidation und demnach als katalytisch aktive Verbindung ein Pyrochlor und/oder ein Beta polymorph A-Typ (BEA) Zeolithe und/oder ein Colbalt-Nickel-Oxid aufweist.

Das über den CH₄-Oxidationskatalysator zu führende Abgas weist erfindungsgemäß einen NO₂-Anteil, bezogen auf einen Gesamtanteil an Stickoxiden, von mindestens 15% auf.

Bei der hier vorliegenden Erfindung wird zur Reduktion der CH₄-Emissionen das Abgas der Brennkraftmaschine, in welcher ein gasförmiger Kraftstoff verbrannt wird, mit einem definierten NO₂-Anteil über den CH₄-Oxidationskatalysator geführt, der zur CH₄-Oxidation und demnach als katalytisch aktive Verbindung ein Pyrochlor und/oder BEA-Zeolithe und/oder ein Cobalt-Nickel-Oxid aufweist. Der Erfindung liegt dabei die Erkenntnis zugrunde, dass bei einem solchen CH₄-Oxidationskatalysator mit mindestens einer der obigen katalytisch aktiven Verbindungen CH₄ optimal zersetzt werden kann, und zwar dann, wenn der NO₂-Anteil in dem über den CH₄-Oxidationskatalysator zu führenden Abgas, also stromaufwärts des CH₄-Oxidationskatalysators, bezogen auf den Gesamtanteil an Stickoxiden mindestens 15 % beträgt.

Nach einer vorteilhaften Weiterbildung weist der CH₄-Oxidationskatalysator zur CH₄-Oxidation und demnach als katalytisch aktive Verbindung Pyrochlor auf. Vorzugsweise weist das Pyrochlor zumindest ein Pyrochlor auf, welches aus folgender Gruppe ausgewählt ist: Sm₂Zr₂O₇, Sm₂Mo₂O₇, La₂Ti₂O₇, La₂CoₓSn₂₋ₓO_{7-δ}, La₂CoₓZr₂₋ₓO_{7-δ}, Mn₂CoₓZr₂₋ₓO_{7-δ}, Pr₂Ru₂O₇, ZrTiGd₂O₇, Pr₂Co₂O₇ und Pr₂CoₓZr₂₋ₓo_{7-δ}, wobei 0≤δ≤2. Ein derartiger CH₄-Oxidationskatalysator erlaubt in Kombination mit dem definiert eingestellten NO₂-Anteil im Abgas stromaufwärts des CH₄-Oxidationskatalysators eine optimale Zersetzung von CH₄.

Nach einer vorteilhaften Weiterbildung sind Elemente des Pyrochlors und/oder des Beta polymorph A-Typ (BEA) Zeolithe mit Metallen der Seltenen Erden und/oder Eisen und/oder Cobalt und/oder Nickel und/oder Kupfer ausgetauscht oder substituiert. Auch dies dient der optimalen Zersetzung von CH₄ im CH₄-Oxidationskatalysator.

Nach einer vorteilhaften Weiterbildung der CH₄-Oxidationskatalysator zur CH₄-Oxidation und demnach als katalytisch aktive Verbindung eine Colbalt-Nickel-Verbindung CoₓNi_{y}, bevorzugt als Oxid, aufweist, wobei 1≤x≤10, bevorzugt 1≤x≤4, wobei 0≤y≤9, bevorzugt 1≤y≤4, und wobei vorzugsweise x+y≤10, bevorzugt x+y≤8, besonders bevorzugt x+y≤6. Auch mit einem derartigen Cobalt-Nickel-Oxid als katalytisch aktive Verbindung im CH₄-Oxidationskatalysator kann CH₄ optimal zersetzt werden, und zwar dann, wenn der NO₂-Anteil im Abgas stromaufwärts des CH₄-Oxidationskatalysators bezogen auf den Gesamtanteil an Stickoxiden mindestens 15 % beträgt.

Nach einer vorteilhaften Weiterbildung wird der NO₂-Anteil im Abgas über mindestens einen Verbrennungsparamater der den gasförmigen Kraftstoff verbrennenden Brennkraftmaschine und/oder stromaufwärts des CH₄-Oxidationskatalysators über NO-Oxidationskatalysator eingestellt. Hiermit kann der NO₂-Anteil im Abgas stromaufwärts des CH₄-Oxidationskatalysators besonders vorteilhaft eingestellt werden.

Nach einer vorteilhaften Weiterbildung wird das Abgas stromabwärts des CH₄-Oxidationskatalysators über einen SCR-Katalysator geführt, wobei stromabwärts des CH₄-Oxidationskatalysators und stromaufwärts des SCR-Katalysators NH₃ oder eine NH₃-Vorlaufersubstanz in das Abgas eingebracht wird. Über den SCR-Katalysator kann nachfolgend im Abgas, welches bereits über den CH₄-Oxidationskatalysator geführt wurde, der Stickoxidanteil reduziert werden.

Die erfindungsgemäße Brennkraftmaschine ist in Anspruch 10 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

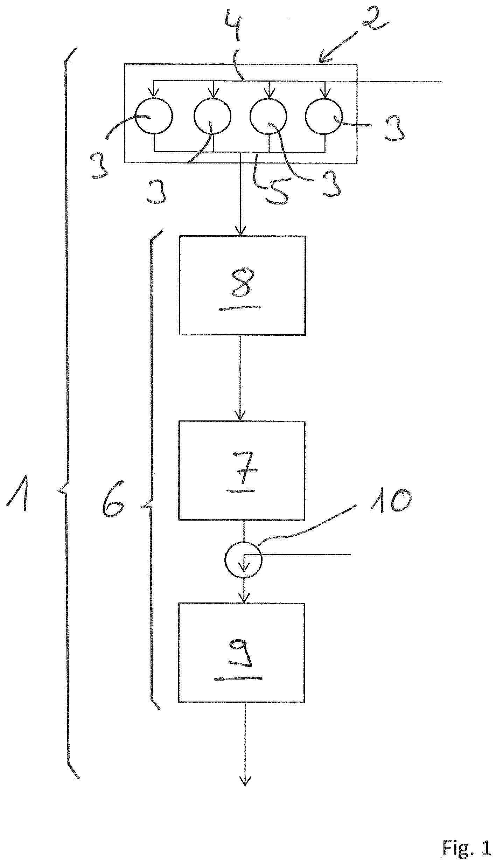

- Fig. 1: eine stark schematisierte Ansicht einer erfindungsgemäßen Brenn-kraftmaschine zur Verdeutlichung des erfindungsgemäßen Verfah-rens zur Nachbehandlung des Abgases der Brennkraftmaschine.

Die Erfindung betrifft eine Brennkraftmaschine, in welcher ein gasförmiger Kraftstoff verbrannt wird. Ferner betrifft die Erfindung ein Verfahren zur Nachbehandlung des Abgases der den gasförmigen Kraftstoff verbrennenden Brennkraftmaschine.

Fig. 1 zeigt ein stark schematisiertes Schema einer erfindungsgemäßen Brennkraftmaschine 1. Die Brennkraftmaschine 1 verfügt über mindestens einen Zylinderblock 2 mit Zylindern 3. In den Zylindern 3 der Brennkraftmaschine 1 wird ein gasförmiger Kraftstoff verbrannt, so zum Beispiel Erdgas. Bei der Brennkraftmaschine 1 handelt es sich entweder um einen Gasmotor oder um einen im Gaskraftstoffbetriebsmodus betriebenen Dual-Fuel-Motor.

Fig. 1 visualisiert mit einer Zuführung 4, dass den Zylindern 3 der Brennkraftmaschine gasförmiger Kraftstoff zugeführt wird, insbesondere ein Gemisch aus Ladeluft und Gas. Eine Abführung 5 visualisiert, dass bei der Verbrennung entstehendes Abgas von den Zylindern 3 abgeführt und über ein Abgasnachbehandlungssystem 6 der Brennkraftmaschine 1 geführt wird.

Das Abgasnachbehandlungssystem 6 umfasst einen CH₄-Oxidationskatalysator 7. Zur CH₄-Oxidation und demnach als katalytisch aktive Verbindung umfasst der CH₄-Oxidationskatalysator ein Pyrochlor und/oder ein Beta polymorph A-Typ (BEA) Zeolithe und/oder ein Cobalt-Nickel-Oxid.

Das über den CH₄-Oxidationskatalysator 7 zu führende Abgas weist einen NO₂-Anteil, bezogen auf den Gesamtanteil an Stickoxiden im Abgas, von mindestens 15 %, bevorzugt von mindestens 30 %, besonders bevorzugt von mindestens 50 % auf.

Im gezeigten Ausführungsbeispiel umfasst das Abgasnachbehandlungssystem 6 stromaufwärts des CH₄-Oxidationskatalysators 7 einen NO-Oxidationskatalysator 8, um das die Zylinder 3 der Brennkraftmaschine 1 verlassende Abgas zunächst über einen NO-Oxidationskatalysator 8 zu führen und mithilfe des NO-Oxidationskatalysators 8 den Anteil an NO₂ im Abgas, bezogen auf den Gesamtanteil an Stickoxiden im Abgas, auf mindestens 15 %, bevorzugt auf mindestens 30 %, besonders bevorzugt auf mindestens 50 % einzustellen.

Alternativ oder auch zusätzlich zum NO-Oxidationskatalysator 8 kann der NO₂-Anteil im Abgas auch über einen Verbrennungsparameter der den gasförmigen Kraftstoff verbrennenden Brennkraftmaschine 1 werden.

Nach einer vorteilhaften Weiterbildung der Erfindung umfasst der CH₄-Oxidationskatalysator zur CH₄-Oxidation zumindest Pyrochlor.

Das Pyrochlor weist dabei zumindest ein Pyrochlor auf, welches aus folgender Gruppe ausgewählt ist:

Sm₂Zr₂O₇

Sm₂Mo₂O₇

La₂Ti₂O₇

La₂CoₓSn₂₋ₓO_{7-δ}

La₂CoₓZr₂₋ₓO_{7-δ}

Mn₂CoₓZr₂₋ₓO_{7-δ}

Pr₂Ru₂O₇

ZrTiGd₂O₇

Pr₂Co₂O₇

Pr₂CoₓZr₂₋ₓO_{7-δ}

wobei 0≤δ≤2.

Nach einer vorteilhaften Weiterbildung der Erfindung weist der CH₄-Oxidationskatalysator zusätzlich oder auch alternativ zum Pyrochlor Beta polymorph A-Typ (BEA) Zeolithe auf.

Dann, wenn der CH₄-Oxidationskatalysator zur CH₄-Oxidation und demnach als katalytisch aktive Verbindung Pyrochlor und/oder BEA-Zeolithe aufweist, sind Elemente des Pyrochlors und/oder des BEA-Zeolithe vorzugsweise mit Metallen der seltenen Erden und/oder mit Eisen und/oder mit Cobalt und/oder mit Nickel und/oder mit Kupfer substituiert. Ferner können das Pyrochlor und/oder BEA-Zeolithe mit Rh, Ru, Ir, Os, Bi, Zn, Gd angereichert sein, indem diese Elemente in das Pyrochlor und/oder BEA-Zeolithe eingesetzt sind.

Durch Zugabe von Alkalimetallen und Erdalkalimetallen kann ferner die thermische Stabilität des CH₄-Oxidationskatalysators 7 erhöht werden. Zusätzlich zum Pyrochlor und/oder BEA-Zeolithe kann demnach der CH₄-Oxidationskatalysator 7 also Alkalimetalle und Erdalkalimetalle aufweisen.

Nach einer weiteren vorteilhaften Weiterbildung der Erfindung umfasst der CH₄-Oxidationskatalysator 7 zur CH₄-Oxidation und demnach als katalytisch aktive Verbindung eine Cobalt-Nickel- Verbindung CoₓNi_{y}, wobei sich die oxidische Form als vorteilhaft erwiesen hat.

Für die Colbalt-Nickel-Verbindung CoₓNi_{y} gilt:
1≤x≤10, bevorzugt 1≤x≤4,
0≤y≤9, bevorzugt 1≤y≤4,
x+y≤10, bevorzugt x+y≤8, besonders bevorzugt x+y≤6.

Das Cobalt-Nickel-Verbindung CoₓNi_{y}, insbesondere deren Oxid, kann alternativ oder zusätzlich zum Pyrochlor und/oder zum Beta polymorph A-Typ (BEA) Zeolithe vorhanden sein.

Als Träger für die oben genannten katalytisch aktiven Komponenten kommen Al₂O₃, TiO₂, SiO₂ sowie WO₃, einzeln oder in Kombination, in Frage.

Im Ausführungsbeispiel ist stromabwärts des CH₄-Oxidationskatalysators ein SCR-Katalysator 9 angeordnet, über den das Abgas, welches den CH₄-Oxidationskatalysator 7 verlässt, zur Reduktion des Stickoxidanteils im Abgas geführt wird. Dabei ist in Strömungsrichtung des Abgases gesehen stromabwärts des CH₄-Oxidationskatalysators 7 und stromaufwärts des SCR-Katalysators 9 eine Einbringeinrichtung 10 zum Einbringen von NH₃ oder NH₃-Vorläufersubstanz in das Abgas angeordnet, um Stickoxide im Abgas im Bereich des SCR-Katalysators 9 effektiv abzubauen bzw. zu reduzieren.

Mit der hier vorliegenden Erfindung ist eine effektive Zersetzung von CH₄ im Abgas einer einen gasförmigen kraftstoffverbrennenden Brennkraftmaschine möglich, und zwar ohne die Notwendigkeit der Verwendung von Metallen der Platinmetallgruppe, wie zum Beispiel Platin und/oder Palladium im Bereich des CH₄-Oxidationskatalysators

Der Anteil an Platin und Palladium an den zur Zersetzung von CH₄ genutzten katalytisch aktiven Aktivkomponenten ist dabei jeweils kleiner als 5 %, bevorzugt kleiner als 3 %, äußerst bevorzugt kleiner als 1 %. Nach einer vorteilhaften Weiterbildung ist der Anteil der Summe aus Platin und Palladium an den zur CH₄-Zersetzung genutzten Aktivkomponenten kleiner als 5 %, vorteilhaft kleiner als 3 %, äußerst vorteilhaft kleiner als 1 %.

### Bezugszeichenliste

- 1: Brennkraftmaschine
- 2: Zylinderblock
- 3: Zylinder
- 4: Zuführung
- 5: Abführung
- 6: Abgasnachbehandlungssystem
- 7: CH₄-Oxidationskatalysator
- 8: NO-Oxidationskatalysator
- 9: SCR-Katalysator
- 10: Einbringeinrichtung

## Patentansprüche

1. Verfahren zur Nachbehandlung des Abgases einer einen gasförmigen Kraftstoff verbrennenden Brennkraftmaschine (1), nämlich eines Gasmotors oder eines im Gaskraftstoffbetriebsmodus betriebenen Dual-Fuel-Motors,
wobei das Abgas über einen CH₄-Oxidationskatalysator (7) geführt wird, der zur CH₄-Oxidation und demnach als katalytisch aktive Verbindung ein Pyrochlor und/oder ein Beta polymorph A-Typ (BEA) Zeolithe und/oder eine Cobalt-Nickel-Verbindung aufweist,
wobei das über den CH₄-Oxidationskatalysator zu führende Abgas einen NO₂-Anteil, bezogen auf einen Gesamtanteil an Stickoxiden, von mindestens 15% aufweist.

2. Verfahren nach Anspruch 1, **dadurch gekennzeichnet, dass** das über den CH₄-Oxidationskatalysator (7) zu führende Abgas stromaufwärts des CH₄-Oxidationskatalysators (7) einen NO₂-Anteil, bezogen auf einen Gesamtanteil an Stickoxiden, von mindestens 30%, vorzugsweise von mindestens 50%, aufweist.

3. Verfahren nach Anspruche 1 oder 2, **dadurch gekennzeichnet, dass** der CH₄-Oxidationskatalysator (7) zur CH₄-Oxidation Pyrochlor aufweist.

4. Verfahren nach Anspruch 3, **dadurch gekennzeichnet, dass** das Pyrochlor zumindest ein Pyrochlor aufweist, welches aus folgender Gruppe ausgewählt ist:
Sm₂Zr₂O₇, Sm₂Mo₂O₇, La₂Ti₂O₇, La₂CoₓSn₂₋ₓO_{7-δ}, La₂CoₓZr₂₋ₓO_{7-δ}, Mn₂CoₓZr₂₋ₓO_{7-δ}, Pr₂Ru₂O₇, ZrTiGd₂O₇, Pr₂Co₂O₇ und Pr₂CoₓZr₂₋ₓO_{7-δ},
wobei 0≤δ≤2.

5. Verfahren nach einem der Ansprüche 1 bis 4, **dadurch gekennzeichnet, dass** Elemente des Pyrochlors und/oder des Beta polymorph A-Typ (BEA) Zeolithe mit Metallen der Seltenen Erden und/oder Eisen und/oder Cobalt und/oder Nickel und/oder Kupfer ausgetauscht oder substituiert sind.

6. Verfahren nach einem der Ansprüche 1 bis 5, **dadurch gekennzeichnet, dass** der Oxidationskatalysator (7) zur CH₄-Oxidation eine Colbalt-Nickel-Verbindung CoₓNi_{y}, vorteilhaft in dessen oxidischer Form, aufweist,
wobei 1≤x≤10, bevorzugt 1≤x≤4,
wobei 0≤y≤9, bevorzugt 1≤y≤4.

7. Verfahren nach Anspruch 6, **dadurch gekennzeichnet, dass** x+y≤10, bevorzugt x+y≤8, besonders bevorzugt x+y≤6.

8. Verfahren nach einem der Ansprüche 1 bis 7, **dadurch gekennzeichnet, dass**
der NO₂-Anteil im Abgas über mindestens einen Verbrennungsparamater der den gasförmigen Kraftstoff verbrennenden Brennkraftmaschine (1) eingestellt wird, und/oder
der NO₂-Anteil im Abgas stromaufwärts des CH₄-Oxidationskatalysators (7) über NO-Oxidationskatalysator (8) eingestellt wird.

9. Verfahren nach einem der Ansprüche 1 bis 8, **dadurch gekennzeichnet, dass** das Abgas stromabwärts des CH₄-Oxidationskatalysators (7) über einen SCR-Katalysator (9) geführt wird, wobei stromabwärts des CH₄-Oxidationskatalysators (7) und stromaufwärts des SCR-Katalysators (9) NH₃ oder eine NH₃-Vorlaufersubstanz in das Abgas eingebracht wird.

10. Brennkraftmaschine (1), nämlich Gasmotor oder Dual-Fuel-Motor,
mit Zylindern (3), in denen ein gasförmiger Kraftstoff verbrennbar ist,
mit einem CH₄-Oxidationskatalysator (7), über den Abgas führbar ist, der zur CH₄-Oxidation und demnach als katalytisch aktive Verbindung ein Pyrochlor und/oder ein Beta polymorph A-Typ (BEA) Zeolithe und/oder eine Colbalt-Nickel-Verbindung aufweist,
wobei die Brennkraftmaschine und/oder stromaufwärts des CH₄-Oxidationskatalysators (7) ein NO-Oxidationskatalysator (8) in dem über den CH₄-Oxidationskatalysator (7) zu führenden Abgas einen NO₂-Anteil, bezogen auf einen Gesamtanteil an Stickoxiden, auf mindestens 15% einstellt.

11. Brennkraftmaschine nach Anspruch 10, **dadurch gekennzeichnet, dass** der CH₄-Oxidationskatalysator (7) zur CH₄-Oxidation Pyrochlor aufweist, wobei das Pyrochlor zumindest ein Pyrochlor aufweist, welches insbesondere aus folgender Gruppe ausgewählt ist:
Sm₂Zr₂O₇, Sm₂Mo₂O₇, La₂Ti₂O₇, La₂CoₓSn₂₋ₓO_{7-δ}, La₂CoₓZr₂₋ₓO_{7-δ}, Mn₂CoₓZr₂₋ₓO_{7-δ}, Pr₂Ru₂O₇, ZrTiGd₂O₇, Pr₂Co₂O₇ und Pr₂CoₓZr₂₋ₓO_{7-δ},
wobei 0≤δ≤2.

12. Brennkraftmaschine nach Anspruch 10 oder 11, **dadurch gekennzeichnet, dass** der CH₄-Oxidationskatalysator (7) zur CH₄-Oxidation eine Colbalt-Nickel-Verbindung CoₓNi_{y}, vorteilhaft in deren oxidischer Form, aufweist,
wobei 1≤x≤10, bevorzugt 1≤x≤4,
wobei 0≤y≤9, bevorzugt 1≤y≤4,
wobei insbesondere x+y≤10, bevorzugt x+y≤8, besonders bevorzugt x+y≤6.

13. Brennkraftmaschine nach einem der Ansprüche 10 bis 12, **dadurch gekennzeichnet, dass** Elemente des Pyrochlors und/oder des Beta polymorph A-Typ (BEA) Zeolithe mit Metallen der Seltenen Erden und/oder Eisen und/oder Cobalt und/oder Nickel und/oder Kupfer ausgetauscht oder substituiert sind.

14. Brennkraftmaschine nach einem der Ansprüche 10 bis 13, **gekennzeichnet durch**
einen stromabwärts des CH₄-Oxidationskatalysators (7) angeordneten SCR-Katalysator (9),
eine stromabwärts des CH₄-Oxidationskatalysators (7) und stromaufwärts des SCR-Katalysators (9) angeordnete Einbringeinrichtung (10) zum Einbringen von NH₃ oder einer NH₃-Vorlaufersubstanz in das Abgas.
